# DEMANDE DE BREVET EUROPEEN

(11) **EP 3 300 952 A1**
(43) Date de publication de la demande: **04.04.2018**
(21) Numéro de dépôt: 17193501.8
(22) Date de dépôt: 27.09.2017
(51) Int. Cl.: B60Q 3/76, B60Q 3/80, F21V 14/00, F21V 14/04, G02B 3/14

(54) **DISPOSITIF D'ECLAIRAGE INTERIEUR VARIABLE POUR VEHICULE**

(30) Priorité: 28.09.2016 FR 1659248
(71) Demandeur: Valeo Vision, 93012 Bobigny Cedex (FR)
(72) Inventeur: ALBOU, Pierre, 93012 BOBIGNY Cedex (FR); LECORRE, Jérôme, 93012 BOBIGNY Cedex (FR); TASSY, Pierre-Louis, 93012 BOBIGNY Cedex (FR); GAYE, Birane, 93012 BOBIGNY Cedex (FR)
(74) Mandataire: Valeo Vision

(57) **Abrégé**

L'invention a trait à un dispositif d'éclairage intérieur (2) pour véhicule notamment automobile, comprenant au moins une source lumineuse (6) ; un dispositif optique de projection (10) apte à être alimenté en lumière par la ou les sources lumineuses (6) et à former un faisceau lumineux à géométrie variable ; le dispositif optique de projection (10) est configuré pour présenter une distance focale variable.

## Description

L'invention a trait au domaine de l'éclairage, en particulier de l'éclairage intérieur notamment pour véhicules automobiles.

Le document de brevet publié EP 2 676 843 A1 divulgue un dispositif d'éclairage individuel pour siège de véhicule. Le dispositif comprend plusieurs sources lumineuses émettant chacune suivant une direction privilégiée. L'éclairage produit par ce dispositif peut être modulé en faisant varier l'intensité des sources lumineuses. Ce dispositif présente l'avantage d'être de construction simple et économique. La modulation qu'il procure s'avère cependant être grossière en ce qu'elle est limitée à la géométrie des différents faisceaux qui est fixe.

L'invention a pour objectif de pallier au moins un inconvénient de l'état de l'art susmentionné. Plus particulièrement, l'invention a pour objectif de proposer un dispositif d'éclairage qui permet une variation plus fine du faisceau lumineux, et ce de manière simple et fiable.

L'invention a pour objet un dispositif d'éclairage intérieur pour véhicule notamment automobile, comprenant : au moins une source lumineuse ; un dispositif optique de projection apte à être alimenté en lumière par la ou les sources lumineuses et à former un faisceau lumineux à géométrie variable ; remarquable en ce que le dispositif optique de projection est configuré pour présenter une distance focale variable.

Les dispositifs optiques présentant une distance focale variable ont habituellement au moins une surface optique à géométrie variable. Certaines avancées technologiques présagent l'apparition de lentilles à focale variable sans géométrie variable. A titre d'exemple, un champ électrique (onde stationnaire) ou un modulateur spatial de phase à cristaux liquide peuvent créer une lentille à gradient d'indice variable avec une géométrie constante.

Par surface optique à géométrie variable on entend que la forme et/ou l'orientation de la surface en question est variable.

Selon un mode avantageux de l'invention, la ou au moins une des surfaces optiques à géométrie variable est une face, préférentiellement de sortie, d'une lentille, ladite face ayant un rayon de courbure variable.

Selon un mode avantageux de l'invention, la lentille comprend un matériau optique transparent liquide dans une chambre.

Selon un mode avantageux de l'invention, la lentille comprend une paroi déformable élastiquement en contact avec le matériau optique transparent liquide, le rayon de courbure de ladite paroi étant variable par déplacement dudit matériau par rapport à la chambre.

Selon un mode avantageux de l'invention, le déplacement du matériau optique transparent liquide est opéré par application d'un champ magnétique.

Le matériau transparent liquide peut notamment être un matériau à base de polymère, d'eau, d'huile, de cristaux liquides et/ou de silicone.

Selon un mode avantageux de l'invention, la lentille comprend une chambre renfermant deux matériaux optiques transparents liquides différents en contact direct l'un avec l'autre pour former un dioptre, la chambre comprenant une paroi latérale hydrophobique en contact avec les deux matériaux, et des électrodes configurées pour permettre d'appliquer un champ électrique entre un desdits matériaux et ladite paroi en vue de modifier le mouillage de la dite paroi et ledit matériau, la modification dudit mouillage modifiant le rayon de courbure du dioptre.

Avantageusement, les deux matériaux optiques transparents liquides différents sont respectivement de l'eau et de l'huile.

Selon un mode avantageux de l'invention, la variation de courbure de la face de la lentille permet de faire varier le champ angulaire du faisceau lumineux.

Selon un mode avantageux de l'invention, la lentille est configurée et disposée de manière à ce que la variation de géométrie, préférentiellement de la courbure, de la face de ladite lentille permette de faire varier l'orientation du faisceau lumineux.

Avantageusement, le dispositif optique de projection comprend une lentille de mise en forme disposée entre la ou les sources lumineuses et la lentille avec au moins une des surfaces optiques à géométrie variable, ladite lentille de mise en forme étant configurée pour former un faisceau lumineux, préférentiellement convergent, à partir de la lumière produite par la ou les sources lumineuses.

Selon un mode avantageux de l'invention, la ou au moins une des surfaces optiques à géométrie variable comprend un microsystème avec au moins un micro-miroir dont l'orientation est actionnée électriquement.

Selon un mode avantageux de l'invention, le dispositif optique de projection comprend, en outre, un élément optique, tel qu'une lentille bi convergente, apte à focaliser la lumière émise par la ou les sources lumineuses vers le ou les micro miroirs.

Selon un mode avantageux de l'invention, le dispositif optique de projection comprend, en outre, une lentille de projection apte à recevoir la lumière réfléchie par le ou les micro-miroirs et à former le faisceau lumineux.

Selon un mode avantageux de l'invention, l'actionnement de l'orientation du ou des micro-miroirs permet de faire varier l'orientation du faisceau lumineux.

Selon un mode avantageux de l'invention, le dispositif comprend le microsystème à micro-miroir(s) et la lentille avec la face à rayon de courbure variable, ladite lentille étant disposée de manière à recevoir la lumière réfléchie par le ou les micro-miroirs.

Selon un mode avantageux de l'invention, le dispositif optique de projection, avantageusement la ou les surfaces optiques à géométrie variable, est actionnable électriquement de manière à faire varier la distance focale, l'orientation et/ou l'ouverture du faisceau lumineux pouvant être variée par un signal de commande électrique.

Les mesures de l'invention sont intéressantes en ce qu'elles confèrent au dispositif lumineux une capacité à adapter l'ouverture et/ou l'orientation du faisceau lumineux, notamment en fonction des besoins des personnes concernées. Cette adaptation est réalisée par commande électrique sans pour autant qu'un dispositif électromécanique externe potentiellement encombrant et sujet à défaillance soit nécessaire. En effet, la variation de courbure d'une face d'entrée ou de sortie d'une lentille a lieu au sein d'une enceinte fermée et compacte. Similairement, le pivotement du ou des micro-miroirs d'un microsystème a lieu au sein du système et est une fonction primaire dudit système. Le niveau d'intégration de la solution de l'invention, à savoir de faire varier la géométrie d'au moins une surface optique au sein du dispositif lumineux, est élevée et procure ainsi une compacité, simplicité et fiabilité du dispositif.

D'autres caractéristiques et avantages de la présente invention seront mieux compris à l'aide de la description et des dessins parmi lesquels :
- La figure 1 est une illustration schématique d'un dispositif d'éclairage selon un premier mode de réalisation de l'invention ;
- La figure 2 illustre la variation du faisceau d'éclairage du dispositif de la figure 1 disposé au-dessus d'une rangée de sièges dans un véhicule ;
- La figure 3 est une illustration schématique d'un dispositif d'éclairage selon un deuxième mode de réalisation de l'invention ;
- La figure 4 illustre la variation du faisceau d'éclairage du dispositif de la figure 3 disposé au-dessus d'une rangée de sièges dans un véhicule ;
- La figure 5 est une illustration schématique d'un dispositif d'éclairage selon un troisième mode de réalisation de l'invention ;
- La figure 6 illustre la variation du faisceau d'éclairage du dispositif de la figure 5 disposé au-dessus d'une rangée de sièges dans un véhicule.

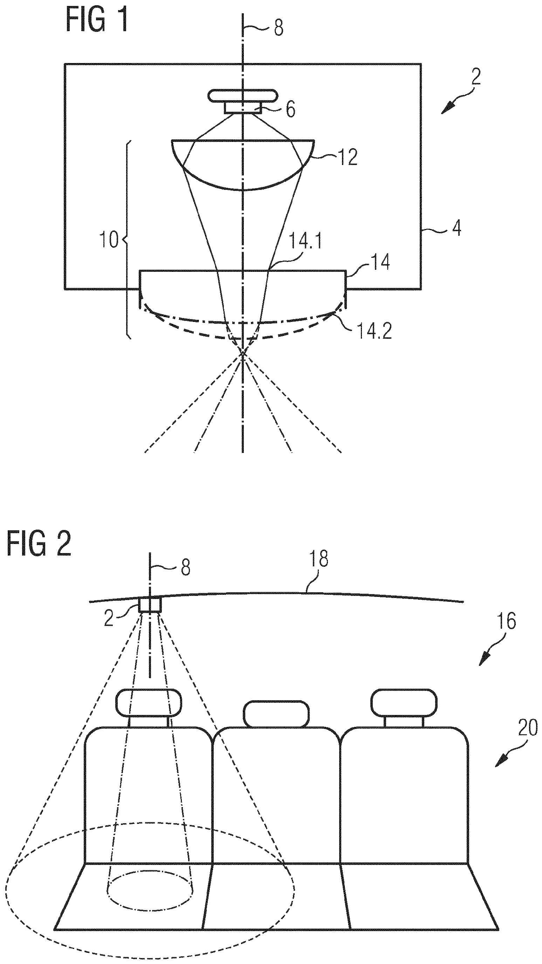

Les figures 1 et 2 illustrent un dispositif d'éclairage intérieur suivant un premier mode de réalisation. La figure 1 illustre de manière schématique le dispositif et la figure 2 l'implantation du dispositif à l'intérieur d'un véhicule et la variation du faisceau lumineux.

A la figure 1, le dispositif d'éclairage 2 comprend un boîtier 4 logeant une ou plusieurs sources lumineuses 6. En l'occurrence une seule source lumineuse du type diode à électroluminescence est représentée, étant toutefois entendu que d'autres type de sources lumineuses, notamment à incandescence, sont envisageables. La source lumineuse 6 éclaire essentiellement dans un demi-espace délimité par le plan de son support, suivant l'axe optique 8 du dispositif 2. Ce dernier comprend également un dispositif optique de projection 10 apte à recevoir la lumière émise par la source lumineuse 6 et à former un faisceau d'éclairage. Le dispositif optique 10 peut comprendre une première lentille 12 de mise en forme du faisceau produit par la source lumineuse 6. Cette lentille 12 est avantageusement du type convergente. Elle permet de dévier les rayons émis dans le demi-espace par la source lumineuse 6 en un faisceau divergeant de moindre ouverture.

Le dispositif optique 10 comprend une deuxième lentille 14 à géométrie variable. Plus précisément, au moins une des faces d'entrée 14.1 et de sortie 14.2 présente une courbure variable. Dans l'exemple de la figure 1, c'est la face de sortie 14.2 qui présente une courbure variable. La variation de courbure est représentée de manière schématique par un premier profil en trait interrompu régulier, ledit profil étant généralement droit, et un deuxième profil en trait interrompu irrégulier (type trait d'axe), ledit profil étant bombé de manière à former une face convexe.

Le faisceau produit lorsque la lentille 14 est dans la configuration où sa face de sortie 14.2 est généralement plane est illustré en trait interrompu régulier. Il est à noter que cette configuration plane est à titre d'exemple, étant entendu qu'il pourrait s'agir d'une configuration courbe. Similairement, le faisceau produit lorsque la lentille 14 est dans la configuration où sa face de sortie 14.2 est convexe est illustré en trait interrompu irrégulier. On peut observer que la configuration plate de la face de sortie 14.2 produit un faisceau plus large que la configuration convexe de ladite face.

La lentille peut comprendre un matériau optique principal qui est liquide et délimité par une paroi déformable élastiquement. Dans la configuration de la lentille 14 de la figure 1, la paroi déformable élastiquement correspond à la face de sortie 14.2. Le matériau optique liquide est contenu dans une chambre de la lentille. La courbure de la face de sortie formée par la paroi déformable peut être variée par déplacement d'une partie du matériau optique liquide en dehors ou vers la chambre. Ce déplacement peut notamment être réalisé par un actuateur électromagnétique agissant sur une portion de paroi élastique de la chambre. De telles lentilles sont commercialement disponibles notamment auprès de la société Optotune®.

La lentille peut également comprendre deux matériaux optique liquides différents et en contact l'un avec l'autre en formant un dioptre. L'un des matériaux peut être de l'eau et l'autre de l'huile. Ces matériaux sont contenus dans une chambre dont une paroi latérale, au niveau d'un des deux matériaux, comporte un revêtement hydrophobique en contact avec ledit matériau. Cette portion de paroi forme une première électrode alors qu'une deuxième électrode est en contact avec le matériau optique liquide en contact avec la paroi formant la première électrode. Le fait d'appliquer une tension électrique aux électrodes va générer un champ électrique dans le matériau liquide, au niveau de son contact avec le revêtement hydrophobique. Ce champ électrique va alors modifier le mouillage du revêtement en question par le matériau, conformément au principe bien connu en soi d'électro-mouillage (« electrowetting » en anglais). Cette variation de mouillage va modifier le ménisque formé par le matériau au contact de la paroi en question et de l'autre matériau. Cette modification va entrainer un changement de courbure du dioptre entre les deux matériaux. De telles lentilles sont commercialement disponibles auprès de la société Varioptic®.

La figure 2 illustre l'implantation du dispositif d'éclairage 2 de la figure 1 dans un véhicule 16, plus précisément sur le pavillon de toit 18 au-dessus d'une rangée de sièges 20, comme par exemple une rangée de sièges arrières. Dans l'exemple de la figure 2, le dispositif d'éclairage est disposé au-dessus du siège droit (à gauche sur la figure). On peut observer que la variation de focalisation du faisceau permet de passer d'un mode d'éclairage général et diffus, lorsque le faisceau est large (en trait interrompu régulier), à un mode d'éclairage plus concentré, notamment à des fins de lecture, lorsque le faisceau devient étroit (en trait interrompu irrégulier). A puissance lumineuse constante au niveau de la ou des sources lumineuses, la variation de largeur du faisceau permet ainsi de passer d'un éclairage large avec un éclairement modéré à un éclairage étroit avec un éclairement plus élevé.

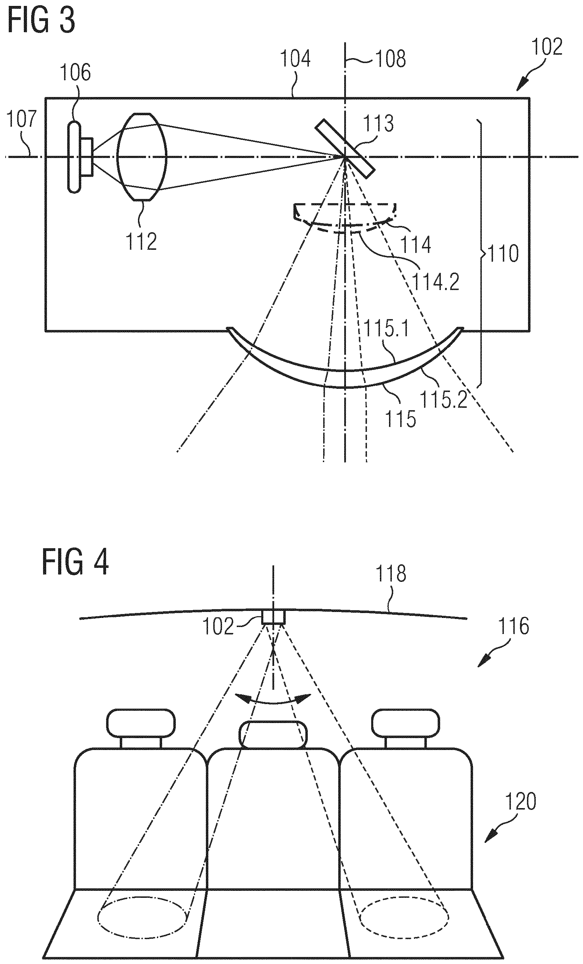

Les figures 3 et 4 illustrent un dispositif d'éclairage intérieur suivant un deuxième mode de réalisation. La figure 3 illustre de manière schématique le dispositif et la figure 4 l'implantation du dispositif à l'intérieur d'un véhicule et la variation du faisceau lumineux. Les numéros de référence du premier mode de réalisation sont utilisés pour désigner les éléments identiques ou correspondants dans le deuxième mode de réalisation, ces numéros étant toutefois majorés de 100. Il est par ailleurs fait référence à la description de ces éléments en relation avec les figures 1 et 2. Des numéros de références spécifiques compris entre 100 et 200 sont utilisés pour désigner les éléments spécifiques.

Le dispositif d'éclairage 102 comprend un boîtier 104 logeant une source lumineuse et un dispositif optique de projection 110. La source lumineuse 106 est disposée pour éclairer suivant un premier axe optique 107 transversal à un deuxième axe optique 108 correspondant à l'axe optique de sortie du dispositif. Le premier axe optique 107 peut former avec le deuxième axe optique 108 un angle compris entre 60° et 90°, préférentiellement entre 70° et 90°. Le dispositif optique de projection 110 comprend une première lentille 112 disposée sur le premier axe optique 107. Cette lentille 112 est du type convergent afin de focaliser la lumière émise par la source lumineuse 106 vers un microsystème électromécanique 113 comprenant un micro-miroir ou une matrice de micro-miroirs. De tels microsystèmes sont couramment désignés DMD, acronyme de l'expression anglo-saxonne *Digital Micro System.* Ces microsystèmes électromécaniques permettent la projection d'une image numérique par réflexion sur des micro-miroirs qui peuvent basculer entre 2 positions différentes. L'inclinaison de chacune de ces positions, par rapport à une direction de référence correspondant au deuxième axe optique 108, peut être comprise entre 10° et 15°. L'angle de balayage peut alors être compris entre 20° et 30°. De manière plus générale, il peut s'agir d'un microsystème opto-électro-mécanique ou MOEMS (acronyme de l'expression anglo-saxonne « Micro-Opto-Electro-Mechanical Systems »). Il s'agit d'un sous-ensemble des systèmes micro-électro-mécaniques ou MEMS (« Micro-Electro-Mechanical Systems »). Les MOEMS sont capables de capter ou de manipuler des signaux optiques à une échelle très petite, utilisant des systèmes mécaniques ou électriques intégrés.

Le dispositif optique de projection 110 comprend une deuxième lentille 115 disposée le long du deuxième axe optique 108, de manière à recevoir la lumière réfléchie par microsystème 113. Cette lentille 115 est avantageusement une lentille de projection de manière à élargir le faisceau provenant du microsystème 113.. La face de sortie 115.2 de la lentille 115 est avantageusement courbée et convexe.

En fonction de la position angulaire du ou des micro-miroirs sur le microsystème 113, le faisceau lumineux sera orienté d'un côté ou de l'autre du deuxième axe optique 108, comme cela est visible à la figure 3 en trait interrompu régulier et en trait interrompu irrégulier (trait d'axe). Le passage d'une position à l'autre peut se faire de manière binaire ou de manière continue avec la possibilité de choisir une ou plusieurs positions intermédiaires. Dans ce cas, le microsystème doit être conçu pour permettre de telles positions angulaires du ou des micro-miroirs.

Toujours en référence à la figure 3, le dispositif optique de projection 110 peut comprendre une lentille à focale variable 114, similaire à la lentille 14 du premier mode de réalisation (figure 1), c'est-à-dire avec au moins une des faces d'entrée et de sortie dont la courbure est variable. Une telle lentille permet de faire varier l'ouverture du faisceau lumineux alors que le microsystème 113, quant à lui, permet de déplacer le faisceau en faisant varier son orientation. Lorsque le microsystème est prévu pour être binaire, c'est-à-dire présenter deux orientations stables du ou des micro-miroirs, il est également envisageable que le dispositif optique de projection 110 comprenne deux lentilles à focale variable disposées, respectivement, perpendiculairement aux axes optiques (non représentés) des deux faisceaux. Il est également à noter qu'il est envisageable que la lentille de projection 115 présente une focale variable, similairement à la lentille 14 du premier mode de réalisation (figure 1).

La figure 4 illustre l'implantation du dispositif d'éclairage 102 de la figure 3 dans un véhicule 116, plus précisément sur le pavillon de toit 118 au-dessus d'une rangée de sièges 120, comme par exemple une rangée de sièges arrières. Dans l'exemple de la figure 4, le dispositif d'éclairage est disposé au-dessus du siège central et éclaire de manière sélective, le siège gauche ou le siège droit. Il est toutefois entendu que le dispositif d'éclairage peut être disposé différemment par rapport aux sièges.

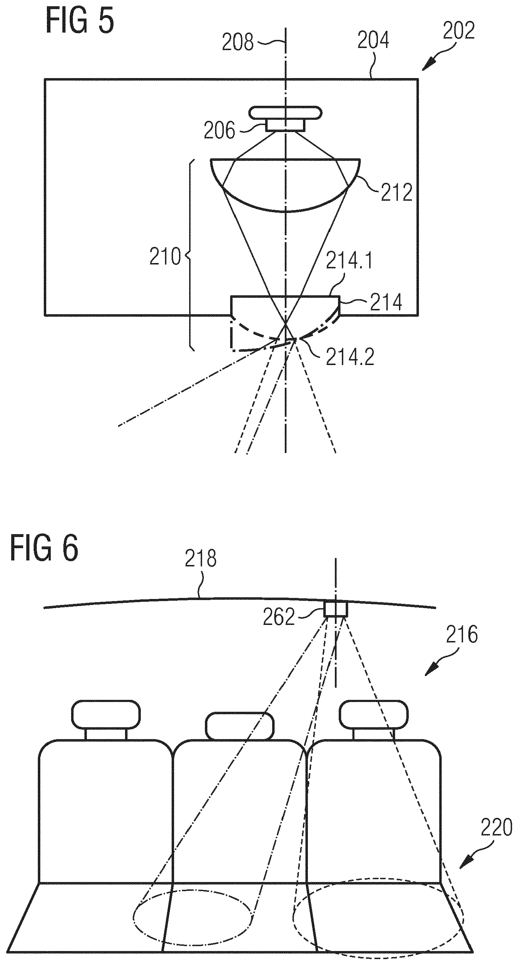

Les figures 5 et 6 illustrent un dispositif d'éclairage intérieur suivant un troisième mode de réalisation. La figure 5 illustre de manière schématique le dispositif et la figure 6 l'implantation du dispositif à l'intérieur d'un véhicule et la variation du faisceau lumineux. Les numéros de référence du premier mode de réalisation sont utilisés pour désigner les éléments identiques ou correspondants dans le troisième mode de réalisation, ces numéros étant toutefois majorés de 200. Il est par ailleurs fait référence à la description de ces éléments en relation avec les figures 1 et 2. Des numéros de références compris entre 200 et 300 et distincts des autres sont utilisés pour désigner les éléments spécifiques.

En référence à la figure 5, le dispositif d'éclairage 202 comprend un boîtier 204 logeant une source lumineuse 206 configurée pour éclairer suivant un axe optique 208. Le dispositif d'éclairage 202 comprend un dispositif optique de projection 210. Celui-ci peut comprendre une première lentille 212, similaire à la lentille 12 du premier mode de réalisation (figure 1). Il s'agit d'une lentille de mise en forme du faisceau produit par la source lumineuse 206. Cette lentille 212 est avantageusement du type convergente.

Le dispositif optique 210 comprend une deuxième lentille 214 à géométrie variable, similaire à la lentille 14 du premier mode de réalisation (figure 1). Plus précisément, au moins une des faces d'entrée 214.1 et de sortie 214.2 présente une courbure variable. Dans l'exemple de la figure 5, c'est la face de sortie 214.2 qui présente une courbure variable. La variation de courbure est représentée de manière schématique par un premier profil en trait interrompu régulier, ledit profil étant généralement bombé et symétrique par rapport à l'axe optique 208, et un deuxième profil en trait interrompu irrégulier (type trait d'axe), ledit profil étant bombé de manière asymétrique. Comme cela est visible à la figure 5, le profil asymétrique permet de dévier les rayons lumineux de manière à former un faisceau incliné par rapport à l'axe optique 208. En d'autres termes, la courbure dissymétrique d'une des faces d'entrée et de sortie de la lentille 214, en l'occurrence la face de sortie, permet de modifier l'orientation du faisceau.

La figure 6 illustre l'implantation du dispositif d'éclairage 202 de la figure 5 dans un véhicule 216, plus précisément sur le pavillon de toit 218 au-dessus d'une rangée de sièges 220, comme par exemple une rangée de sièges arrières. Dans l'exemple de la figure 6, le dispositif d'éclairage est disposé au-dessus du siège gauche (à droite sur la figure). On peut observer que la variation de la courbure de la face de sortie de la lentille du dispositif d'éclairage permet de changer l'orientation du faisceau lumineux, en l'occurrence vers le siège central.

De manière générale, les dispositifs d'éclairage selon l'invention permettent d'ajuster l'ouverture et/ou l'orientation du faisceau lumineux produit. Ils peuvent ainsi être disposé sur un pavillon de toit de véhicule, seuls ou en combinaison, afin de pouvoir assurer un éclairage adaptatif pour les occupants du véhicule.

Dans le cas d'un dispositif d'éclairage où l'orientation du faisceau lumineux est ajustable, il est par ailleurs possible de prévoir de commander ladite orientation de manière manuelle ou encore automatique en fonction du déplacement d'une cible mobile à éclairer, comme notamment un livre. Pour la commande manuelle, des boutons de commande, notamment du type « joystick » peuvent être utilisés. Pour la commande automatique, une ou plusieurs caméras peuvent être mises en oeuvre, avec un logiciel de traitement d'image configuré pour reconnaître un ou plusieurs objets types, tels qu'un livre ou une tablette de lecture.

## Revendications

1. Dispositif d'éclairage intérieur (2 ; 102 ; 202) pour véhicule (16 ; 116 ; 216) notamment automobile, comprenant :
- au moins une source lumineuse (6 ; 106 ; 206) ;
- un dispositif optique de projection (10 ; 110 ; 210) apte à être alimenté en lumière par la ou les sources lumineuses (6 ; 106 ; 206) et à former un faisceau lumineux à géométrie variable ;
**caractérisé en ce que**
le dispositif optique de projection (10 ; 110 ; 210) est configuré pour présenter une distance focale variable.

2. Dispositif (2 ; 102 ; 202) selon la revendication 1, **caractérisé en ce que** le dispositif optique de projection (10; 110; 210) comprend au moins une surface optique (14.2 ; 113, 114.2 ; 214.2) à géométrie variable.

3. Dispositif (2 ; 102 ; 202) selon la revendication 2, **caractérisé en ce que** la ou au moins une des surfaces optiques à géométrie variable est une face (14.2 ; 114.2; 214.2), préférentiellement de sortie, d'une lentille (14; 114; 214), ladite face ayant un rayon de courbure variable.

4. Dispositif (2 ; 102 ; 201) selon la revendication 3, **caractérisé en ce que** la lentille (14; 114; 214) comprend un matériau optique transparent liquide dans une chambre.

5. Dispositif (2 ; 102 ; 202) selon la revendication 4, **caractérisé en ce que** la lentille (14; 114; 214) comprend une paroi déformable élastiquement en contact avec le matériau optique transparent liquide, le rayon de courbure de ladite paroi étant variable par déplacement dudit matériau par rapport à la chambre.

6. Dispositif (2 ; 102 ; 202) selon la revendication 5, **caractérisé en ce que** le déplacement du matériau optique transparent liquide est opéré par application d'un champ magnétique.

7. Dispositif (2 ; 102 ; 202) selon la revendication 3, **caractérisé en ce que** la lentille (14 ; 114 ; 214) comprend une chambre renfermant deux matériaux optiques transparents liquides différents en contact direct l'un avec l'autre pour former un dioptre, la chambre comprenant une paroi latérale hydrophobique en contact avec les deux matériaux, et des électrodes configurées pour permettre d'appliquer un champ électrique entre un desdits matériaux et ladite paroi en vue de modifier le mouillage de la dite paroi et ledit matériau, la modification dudit mouillage modifiant le rayon de courbure du dioptre.

8. Dispositif (2) selon l'une des revendications 3 à 7, **caractérisé en ce que** la variation de courbure de la face (14.2) de la lentille (14) permet de faire varier le champ angulaire du faisceau lumineux.

9. Dispositif (102 ; 202) selon l'une des revendications 3 à 8, **caractérisé en ce que** la lentille (114 ; 214) est configurée et disposée de manière à ce que la variation de géométrie de la face (114.2 ; 214.2) de ladite lentille permet de faire varier l'orientation du faisceau lumineux.

10. Dispositif (102) selon l'une des revendications 2 à 9, **caractérisé en ce que** la ou au moins une des surfaces optiques à géométrie variable comprend un microsystème (113) avec au moins un micro-miroir dont l'orientation est actionnée électriquement.

11. Dispositif (102) selon la revendication 10, **caractérisé en ce que** le dispositif optique de projection (110) comprend, en outre, un élément optique (112), tel qu'une lentille convergente, apte à focaliser la lumière émise par la ou les sources lumineuses (106) vers le ou les micro miroirs.

12. Dispositif (102) selon la revendication 11, **caractérisé en ce que** le dispositif optique de projection (110) comprend, en outre, une lentille de projection (115) apte à recevoir la lumière réfléchie par le ou les micro-miroirs et à former le faisceau lumineux.

13. Dispositif (102) selon l'une des revendications 10 à 12, **caractérisé en ce que** l'actionnement de l'orientation du ou des micro-miroirs permet de faire varier l'orientation du faisceau lumineux.

14. Dispositif (102) selon l'une des revendications 3 à 9 et selon l'une des revendications 10 à 13, **caractérisé en ce que** la lentille (114) avec la face à rayon de courbure variable (114.2) est disposée de manière à recevoir la lumière réfléchie par le ou les micro-miroirs.

15. Dispositif (2 ; 102 ; 202) selon l'une des revendications 1 à 14, **caractérisé en ce que** le dispositif optique de projection (10; 110; 210) est actionnable électriquement de manière à faire varier la distance focale, l'orientation et/ou l'ouverture du faisceau lumineux pouvant être variée par un signal de commande électrique.
